# EUROPEAN PATENT APPLICATION

(11) **EP 1 967 426 A1**
(43) Date of publication of application: **10.09.2008**
(21) Application number: 08151419.2
(22) Date of filing: 14.02.2008
(51) Int. Cl.: B60T 7/20, B60T 8/17, B60T 8/171, B60T 8/172, B60T 8/18, B60T 8/32

(54) **G-sensor-controlled brake system for a trailer dependent on a bivalent command**

(30) Priority: 05.03.2007 NL 2000521
(71) Applicant: Bart Veldhuizen B.V., 3737 BA Groenekan (NL)
(72) Inventor: Veldhuizen, Pieter Gerrit, 3737 BA, Groenekan (NL)
(74) Representative: Klavers, Cornelis

(57) **Abstract**

There is disclosed a brake system installed in a trailer of a vehicle combination. The brake system comprises a controller provided with a control input and a G-sensor, as well as brake means connected to said controller. The brake system is so arranged that, based on a bivalent command to be supplied to the control input, only one value that indicates that the towing vehicle is braking will enable the brake means in the towed vehicle to operate to a degree determined by the G-sensor. Then driving on an incline will not lead to undesirable braking of the vehicle combination.

## Description

The present invention relates to a brake system installed in a towed vehicle coupled to a towing vehicle, comprising: a controller provided with a control input, the controller having a G-sensor and having brake means coupled to said controller.

The present invention further relates to a towed vehicle provided with such a brake system, and to a method wherein a towed vehicle coupled to a towing vehicle can be braked to an extent determined by a G-sensor by means of a brake system installed in the towed vehicle.

Such a brake system is known from US 2002/0,180,257 A1. From said document a number of embodiments of the brake system as described below are known.

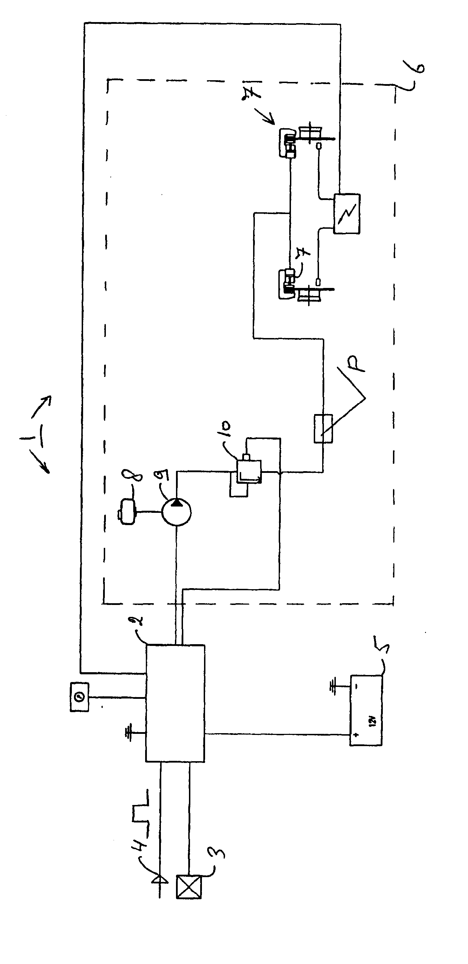

In figure 1 the brake system that is known therefrom comprises a control sensor or a switch in the towing vehicle, which delivers a control signal or a switching signal, respectively, to the towed vehicle. The embodiment comprising the control sensor that provides a control signal is preferred, because said embodiment delivers a brake force dependent control signal to a processor controller in the towed vehicle. Since each brake system is already provided with a brake switch that provides the switching signal, such a sensor is used in a "brake-by-wire" system, in which the brake system of the towing vehicle uses electrical signals for its operation.

Figure 2 illustrates a known embodiment, in which a control sensor in the towing vehicle provides a brake force proportional signal to a processor controller in the towed vehicle.

Figure 3 and figure 4 show alternative embodiments comprising an accelerometer, hereinafter called G-sensor, mounted either in the towing vehicle or in the towed vehicle. In the latter case the brake system installed in the towed vehicle even operates completely independently of whatever signals it receives from the towing vehicle, so that there is advantageously no longer a need for communication or connections between towing vehicles and towed vehicles.

Said document does not provide any information as to whether, and if so, as to the manner in which, a switching signal controlled brake system can be realised in the towed vehicle of figure 1, which is not provided with a G-sensor.

Nor does said document provide any information as to whether, and if so, as to the manner in which, such a switching signal could play a part, seeing that a completely autonomous brake system has already been advantageously realised in the embodiment in question.

A drawback of the embodiments provided with a G-sensor in the towing vehicle or the towed vehicle is the fact that the brake system is activated by the G-sensor upon driving up or down an incline, which is not always necessary and which may lead to unsafe situations. The same applies when the G-sensor, due to vibrations, delivers a signal by which the brake system is undesirably activated.

The object of the present invention is in particular to provide an improved, secured brake system that can be used safely on all kinds of different types of roads and in all kinds of circumstances.

In order to accomplish that object, the brake system according to the invention is characterised in that the brake system is so arranged that, based on a bivalent command to be supplied to the control input, only one value that indicates that the towing vehicle is braking will enable the brake means in the towed vehicle to operate to a degree determined by the G-sensor.

Accordingly, the method according to the invention is characterised in that the brake system in the towed vehicle operates on the basis of a bivalent command from the towing vehicle and can only be active if said command has the one command value that indicates that the towing vehicle is braking.

The advantage of the brake system and the method according to the invention is that when a vehicle combination fitted therewith drives down an incline, this will not lead to G-sensor induced braking, because the brake system in the towed vehicle can only be active if the brake system in the braking vehicle is active as well. In the latter case the bivalent command takes on the one value that enables the brake system in the towed vehicle to operate. If the bivalent command has the other value and the brake system in the towing vehicle is not braking, the vehicle combination will in principle not brake, for example when driving up or down an incline, or when excessive vibrations occur which would previously have activated the brake system. This has resulted in a greater reliability and a safer operation of the brake system.

In further variants of embodiments, axle load measuring means, which are known per se, an ABS (Anti-lock Brake System) unit and/or an ESP (Electronic Stability Programme) unit may be used advantageously for adjusting the degree to which the brake system in the towed vehicle is braking, which degree has already been determined by the G-sensor, partially in dependence on the current axle load, the current slip conditions and/or the degree of swerving in particular of the towed vehicle. The degree of swerving is advantageously measured by the G-sensor, which is multifunctional in that case, the additional G-sensors that are present and/or YAW sensors.

Further advantageous embodiments of the brake system defined in the other dependent claims.

The brake system and the method according to the present invention will now be explained in more detail with reference to the figure below, in which a number of possible embodiments are embodied.

The figure shows a brake system 1 which is installed in a towed vehicle coupled to a towing vehicle (not shown), such as a trailer, a semitrailer or the like. Hereinafter the towed vehicle will be referred to as "trailer". The brake system 1 comprises a generally hydraulic or electric, processor-controlled controller 2, which is connected to an accelerometer or G-sensor 3, which delivers to the controller 2 a signal which comprises a measure of the acceleration or deceleration that the trailer undergoes. In practice the G-sensor 3 is frequently of the type that determines whether the sensor is being accelerated or decelerated on the basis of the force being exerted on a mass spring system incorporated therein.

The controller 2 is provided with a control input 4 to which a pulse generated in the towing vehicle is supplied in the form of a binary or bivalent command signal. One command value indicates that a brake system in the towing vehicle is active and that braking is actually taking place, therefore, whilst the other command value indicates that no braking is taking place. The command signal comprising the one command value enables the controller 2, which is supplied with power by a power supply unit 5, causing the controller 2 to deliver a hydraulic or electrical action signal to brake means 6 connected thereto, which in particular comprise brakes 7 mounted to the trailer, which signal finally activates the hydraulic or electric brakes 7 of the trailer. The other value of the command signal does not enable the controller 2, so that the brake system 1 in the towed vehicle can only be active if the command has the aforesaid one command value. The action signal, which may be an electrical signal or a hydraulic signal, activates the correspondingly configured brake means 6 and controls the brake force exerted by the brakes 7 so that they will operate to a degree determined by the G-sensor 3.

If the controller 2 delivers a hydraulic action signal, the brake means 6 will be provided with a holder 8 for hydraulic fluid, a hydraulic pump 9 or accumulator connected to said holder and a valve 10 connected to the pump 9 and the controller 2. If the valve 10 is a proportional valve, the degree to which the brakes 7 of the trailer active will be proportional to the degree of deceleration being measured by the G-sensor. Generally the valve 10 may be a valve to be electrically or hydraulically controlled by the controller 2, whilst the valve 10 itself may be arranged for delivering a G-sensor controlled hydraulic or electrical brake signal to the brakes 7 via a distributing unit (not shown). The brakes 7 may be drum brakes or disc brakes.

The aforesaid brake signal, which causes a certain G-sensor 3 dictated deceleration of the combination consisting of the towing vehicle and one or more trailers can be influenced as desired by one or more additional brake signal parameters, whose associated means/units are schematically indicated at P. Said parameters may be: the load being exerted on one or more axles of the trailer as measured by mechanical or hydraulic axle load measuring means; slip parameters, as determined by an ABS (Anti-lock Brake System) unit; or swerve or vibration parameters as determined by an ESP (Electronic Stability Programme) unit. In the latter case, the rhythmical or a-rhythmical swerving of a caravan, for example, can be compensated by activating the left-hand brakes and the right-hand brakes 7 either successively or simultaneously. The aforesaid parameter dependencies may be hydraulically or electrically implemented as desired at some point in the brake system 1. The G-sensor can be used multifunctionally for measuring in particular the deceleration of the trailer as well as any vibrations. It is also possible to use one or more YAW sensors for that purpose.

## Claims

1. A brake system installed in a towed vehicle for coupling to a towing vehicle, comprising: a controller provided with a control input, the controller having a G-sensor and having brake means coupled to said controller, **characterised in that** the brake system is so arranged that, based on a bivalent command to be supplied to the control input, only one value that indicates that the towing vehicle is braking will enable the brake means in the towed vehicle to operate to a degree determined by the G-sensor.

2. A brake system according to claim 1, **characterised in that** said controller is an electrical controller or a hydraulic controller.

3. A brake system according to claim 1 or 2, **characterised in that** said brake means comprise a valve, which makes the degree to which brakes in the towed vehicle are actuated proportional to the degree of deceleration measured by the G-sensor.

4. A brake system according to claim 3, **characterised in that** the valve is a valve to be electrically or hydraulically controlled by the controller.

5. A brake system according to claim 3 or 4, **characterised in that** the towed vehicle comprises axle load measuring means, which electrically or hydraulically influence the degree to which the brakes are actuated in dependence on the measured axle load.

6. A brake system according to any one of the claims 3-5, **characterised in that** the valve is arranged for delivering a hydraulic or electrical G-sensor controlled signal to the brakes.

7. A brake system according to claim 6, **characterised in that** the brake system comprises an ABS (Anti-lock Braking System) unit, which influences the hydraulic or electrical signal in dependence on measured slip conditions of the towed vehicle.

8. A brake system according to claim 6 or 7, **characterised in that** the brake system comprises an ESP (Electronic Stability Programme) unit, which influences the hydraulic or electrical signal in dependence on measured slip conditions of the towed vehicle.

9. A brake system according to any one of the claims 1-8, **characterised in that** the brakes are configured as hydraulically or electrically actuated disc brakes or drum brakes.

10. A towed vehicle, trailer or semitrailer provided with a brake system according to any one of the claims 1-9.

11. A method wherein a towed vehicle coupled to a towing vehicle can be braked to an extent determined by a G-sensor by means of a brake system installed in the towed vehicle, **characterised in that** the brake system in the towed vehicle operates on the basis of a bivalent command from the towing vehicle and can only be active if said command has the one command value that indicates that the towing vehicle is braking.
